# EUROPÄISCHE PATENTSCHRIFT

(11) **EP 2 949 244 B1**
(45) Veröffentlichungstag und Bekanntmachung des Hinweises auf die Patenterteilung: **25.09.2019**
(21) Anmeldenummer: 15167785.3
(22) Anmeldetag: 15.05.2015
(51) Int. Cl.: A47J 31/52

(54) **ZUBEREITUNGSMASCHINE FÜR HEISSGETRÄNKE ODER FLÜSSIGE LEBENSMITTEL FÜR HAUSHALTSZWECKE, INSBESONDERE KAFFEEVOLLAUTOMAT**
PREPARATION MACHINE FOR HOT BEVERAGES OR LIQUID FOOD PRODUCTS FOR DOMESTIC USE, IN PARTICULAR A FULLY AUTOMATIC COFFEE MAKER
MACHINE DE PRÉPARATION DE BOISSONS CHAUDES OU D'ALIMENTS LIQUIDES À DES FINS DOMESTIQUES, EN PARTICULIER MACHINE À CAFÉ ENTIÈREMENT AUTOMATIQUE

(30) Priorität: 28.05.2014 DE 102014210261
(43) Veröffentlichungstag der Anmeldung: 02.12.2015
(73) Patentinhaber: BSH Hausgeräte GmbH, 81739 München (DE)
(72) Erfinder: Hoeck, Florian, 83313 Siegsdorf (DE); Kropp, Kai Achim, 93192 Wald (DE)

(56) Entgegenhaltungen:
- WO-A1-2011/020779
- WO-A1-2013/127906
- CN-U- 201 519 062
- DE-A1- 2 342 833
- DE-U1-202008 013 555

## Beschreibung

Die Erfindung betrifft eine Zubereitungsmaschine für Heißgetränke oder flüssige Lebensmittel für Haushaltszwecke, insbesondere einen Kaffeevollautomaten. Als Heißgetränke oder heiße flüssige Lebensmittel kommen beispielsweise Kaffee, Tee, heiße Milch, Kakaogetränke oder auch Suppen in Frage.

Insbesondere betrifft die Erfindung einen Kaffeevollautomaten, im Folgenden auch kurz "KVA" genannt, zur Zubereitung von Kaffee, Tee und heißem Milchschaum. Nachfolgend werden die Begriffe "Zubereitungsmaschine", "Kaffeevollautomat" und "KVA" gleichbedeutend benutzt, so dass einer dieser Begriffe stets die anderen mit beinhaltet und diese daher gegeneinander austauschbar sind.

Der KVA beinhaltet zumeist mindestens ein Mahlwerk zum Mahlen von Kaffeebohnen, einen Durchlauferhitzer für Wasser, eine Hochdruckpumpe zum Pumpen von heißem/kaltem Wasser (bis zu 15 bar), eine Brühgruppe mit Antrieb zum Pressen von gemahlenem Kaffee, zum Definieren einer Brühkammer und zum Auswerfen des Tresters nach dem Brühen. Weiterhin sind eine Spannungsversorgung (z.B. 220 VAC oder auch 12 VDC), sowie eine Bedieneinheit mit Schaltern/Tastern und Anzeigeelementen (z.B. LEDs), sowie auch eine Steuerelektronik zum Schalten/Regeln der einzelnen Komponenten (ggfs. auch von Sensoren, Schalter, Stellelemente/Aktoren, Magnetventile und Dosiereinrichtungen) der KVA vorhanden. Natürlich sind auch Behälter zur Lagerung von Kaffeebohnen, Kaltwasser, Trester, Spül-/Abtropfwasser und ggfs. Milch vorhanden, ebenso wie Zufuhr- und Abfuhrleitungen für Wasser, gebrühten Kaffee, sowie ggfs. Milch, evtl. auch für Reinigungs- und Enthärtungs- und Entkalkungsmittel.

Zudem können weitere Zusatzfunktionen und Zusatzelemente in einem KVA vorhanden sein, wie z.B. ein zweites Heizelement für Teewasser oder Wasserdampf für Milchschaum, Tassenwärmer mit separatem Heizelement, Bypass-Dosierer für extern gemahlenen Kaffee, Display für die Anzeige von Informationen in Text und Bild, automatisches Spülen und Reinigen, Wasserfilter zur Wasseraufbereitung, Vormahlen von Kaffee, kurzes Vorbrühen des gemahlenen Kaffees, kundenspezifische Programmierung der Bedienelemente, der Temperatureinstellung des Brühwassers, der Einstellung der gemahlenen Kaffeemenge pro Tasse, der Einstellung der Wassermenge pro Tasse, und des Mahlgrads (Korngröße) des gemahlenen Kaffees.

Die WO 2013/127906 A1 offenbart eine Zubereitungsmaschine für Getränke mit einer Kontrolleinheit und einem Energiemanagementmodul. Die EP 2027799 B1 offenbart eine derartige Vorrichtung zum Brühen eines flüssigen Lebens- oder Genussmittels mit einer Brühkammer zur Aufnahme eines zu brühenden Stoffes bzw. einer diesen Stoff enthaltenden Portionsverpackung, mit einer elektrischen Pumpe zur Durchleitung einer Flüssigkeit durch die Brühkammer, mit einem elektrischen Durchlauferhitzer zum Aufheizen der Flüssigkeit, sowie gegebenenfalls mit weiteren elektrischen Verbrauchern, Sensoren und/oder Bedienungselementen, wobei die Vorrichtung nach Ablauf einer vorbestimmbaren Zeit nach dem Ende eines Brühvorgangs bzw. nach dem Betätigen eines Bedienungselements mit einem elektronischen Schaltmodul in einen Standby-Modus umschaltbar ist, in dem der Durchlauferhitzer, die Pumpe, sowie Sensoren, Leuchtmittel und dergleichen abgeschaltet sind, mit Ausnahme eines einzigen Leuchtmittels, das der Anzeige des Standby-Modus dient, und keine elektrische Energie verbrauchen.

Der Standby-Modus ist durch Betätigen eines Bedienungselements der Vorrichtung beendbar, wobei je nach Temperatur des Durchlauferhitzers entweder ein Brühvorgang sofort startbar ist, oder der Durchlauferhitzer oberhalb der Bereitschaftstemperatur im Bereitschaftsmodus nachgeheizt wird oder aber der Durchlauferhitzer unterhalb der Bereitschaftstemperatur aufgeheizt wird.

Das Schaltmodul ist mittels eines Timers derart programmiert, dass nach einer programmierbaren Zeitdauer von z.B. 30 Sekunden bis 120 Sekunden seit der Beendigung eines Brühvorgangs bzw. seit der letzten Betätigung eines Bedienungselements der Standby-Modus einschaltbar ist.

Das Betätigen eines Öffnungselements der Brühgruppe, zum Öffnen und Schließen der Brühkammer, unterbricht dabei den Standby-Modus.

Nachteil dabei ist, dass die Leistungsaufnahme im Standby-Modus dennoch ca. 300 bis 500 mW beträgt, da bei eingeschaltetem Hauptschalter, also im aktiven Betriebs-Modus, das analoge elektronische Schalt-Modul ständig mit dem Stromnetz von ca. 220 Volt Wechselstrom verbunden ist, sowie der Microcontroller für die Steuerung des KVA betrieben werden muss.

Aufgabe der vorliegenden Erfindung ist es daher, eine Zubereitungsmaschine für Heißgetränke oder flüssige Lebensmittel für Haushaltszwecke, insbesondere ein KVA, derart weiter zu bilden, dass diese im Standby-Modus wesentlich weniger elektrische Energie verbraucht, aber dennoch Interaktionen, insbesondere Eingriffe mittels KVAinterner und/oder -externer Signalgeber in die Steuerung der Zubereitungsmaschine möglich sind.

Zur Lösung dienen die Merkmale des unabhängigen Patentanspruchs 1, wobei vorteilhafte Weiterbildungen Gegenstand der abhängigen Patentansprüche sind.

Die vorliegende Erfindung beinhaltet eine Zubereitungsmaschine für Heißgetränke oder flüssige Lebensmittel für Haushaltszwecke, insbesondere Kaffeevollautomat, beinhaltend einen Logik-Baustein, welcher mit internen und/oder externen Signalgebern signalleitend verbunden oder verbindbar ist, welche Eingangssignale in den Logik-Baustein eingeben können, welcher mit einer Steuerschaltung zur Steuerung interner Bauelemente der Zubereitungsmaschine signalleitend verbunden ist, wobei der Logik-Baustein aus den Eingangssignalen auf Grund einer inneren Logik ein Ausgangssignal erzeugt, mittels welchem die Steuerschaltung aktiviert oder deaktiviert werden kann, was einem Wechsel zwischen einem Standby-Modus, mit mindestens unter Betriebsspannung stehendem Logik-Baustein, und einem Aktiv-Modus, mit zusätzlich mindestens unter Betriebsspannung stehender Steuerschaltung entspricht.

Der erfindungsgemäße KVA beinhaltet einen digitalen Logik-Baustein, welcher bei eingestecktem Netzstecker bzw. bei ggfs. vorhandenem aktivem Akkumulator (Batterie) ständig unter Kleinspannung (SELV = safety extra low voltage, d.h. ≤ 50 VAC bzw. ≤ 120 VDC) steht, was dem Standby-Modus entspricht.

Über KVA-interne und/oder -externe Schnittstellen ist dieser Logik-Baustein mit KVA-internen und/oder -externen Signalgebern signalleitend verbunden bzw. verbindbar, welche eine Anzahl Eingangssignale in den Logik-Baustein einspeisen können, welcher in Abhängigkeit der Anzahl Eingangssignale eine Anzahl Ausgangssignale (mindestens ein Ausgangssignal z.B. logisch 0 oder 1) ausgibt, welche an eine Steuerschaltung (z.B. Microcontroller) für die Steuerung der internen Bauelemente (z.B. Pumpe, Durchlauferhitzer, Brühgruppenmechanik, Sensoren, Schalter, Anzeigen) übergeben werden.

Daraufhin kann mindestens die Steuerschaltung, sowie ggfs. auch die KVA-internen Bauelemente ein- oder ausschaltet bzw. aktiviert oder deaktiviert werden, d.h. mit dem Bordnetz (220 VAC oder SELV) elektrisch leitend und/oder signalleitend verbunden bzw. von diesen getrennt werden. So wird der KVA bei angelegter elektrischer Energieversorgung immer entweder im Standby-Modus oder im Aktiv-Modus betrieben, wobei im Standby-Modus nur der Logik-Baustein betrieben wird und die weiteren elektrischen Komponenten des KVA erst im Aktiv-Modus teilweise (ggfs. auch stufenweise) oder alle zusammen hinzugeschaltet werden.

Vorteil dabei ist, dass die erfindungsgemäße Zubereitungsmaschine einen KVA-internen und/oder -externen Eingriff, z.B. Manipulation des Benutzers oder Befehl des Microcontrollers der Steuerschaltung oder einer KVA-externen elektrischen Komponente, bemerkt, obwohl nur der Logik-Baustein unter Betriebsspannung steht (Standby-Modus), die übrigen Komponenten des KVA aber erst in einem (durch den Benutzer oder durch die KVA-Steuerung oder durch KVA-externe elektrische Komponenten) anwählbaren Aktiv-Modus unter Betriebsspannung genommen werden. So bleibt der KVA z.B. auch bei Abnehmen der Flüssigkeits-Auffangschale, Öffnen der Wartungstüre, Herausnehmen der Brühgruppe oder Leeren des Tresterbehälters, stets ansprechbar und kann auf diese Aktionen entsprechend reagieren, so z.B. diese registrieren. Auch eine Eingabe von Softwarebefehlen über KVA-interne und/oder -externe Steuer- und/oder Datensignale ist damit möglich. Insbesondere wird auch das Drücken eines Schalters/Tasters für das Einschalten, Ausschalten, Starten, Abbrechen oder Rücksetzen des Logik-Bausteins oder des Microprozessors der Steuerschaltung, erkannt, so dass diese Befehle dann ausgeführt werden können. So kann der KVA aus dem Standby-Modus in den Aktiv-Modus wechseln, in dem mindestens der Mikroprozessor der Steuerschaltung, ggfs. der Durchlauferhitzer und ggfs. Anzeige(n) hierfür ans Stromnetz genommen werden. Auch ein Rückwechseln vom Aktiv-Modus in den Standby-Modus ist damit möglich.

Erfindungsgemäß beinhaltet der Logik-Baustein ein Flip-Flop, insbesondere RS-Flip-Flop und/oder D-Flip-Flop, welches mit einem Ausgangsignal über einen Ausgang die Steuerschaltung ein- oder ausschaltet. Hierbei kann der Logik-Baustein entweder als IC (z.B. Microcontroller) oder auch diskret mittels einzelnen elektrischen Bauelementen wie z.B. Transistoren, Kondensatoren, Spulen, Widerständen, sowie diese elektrisch leitend verbindenden Leitungsbahnen etc., aufgebaut sein. Gleiches gilt für die beiden nachfolgend beschriebenen logischen Gatter-Bausteine "ODER" und "UND".

Erfindungsgemäß liegt am Dateneingang, d.h. S-Eingang bzw. D-Eingang des Flip-Flops, ein Signal mindestens einer der Signalgeber "Einschalten" oder "Ausschalten" oder "Standby-Modus-Aus/Aktiv-Modus-Ein" über einen ODER-Gatter-Baustein an, was insbesondere dem direkten Einschalten /Ausschalten des Aktiv-Modus oder dem Umschalten vom Standby-Modus in den Aktiv-Modus entspricht.

Die Signalgeber für den Befehl "Standby-Modus-Aus/Aktiv-Modus-Ein" können KVA-interne oder -externe Schalter/Taster/Sensoren und/oder Uhren (Echtzeituhren, Stoppuhren), Zähler (z.B. Anzahl Tassen, Reinigungsvorgänge, Wartungsarbeiten) und/oder andere elektrische Komponenten z.B. des Microcontrollers der Steuerschaltung (z.B. bei Programmfehlern oder elektrischem oder mechanischem Defekt) sein.

Hierzu können die Signalgeber für die Eingangssignale des Logik-Bausteins die Signale über KVA-interne oder -externe Daten-Schnittstellen und/oder Daten-Busse an den Logik-Baustein liefern.

Es können daher auch KVA-externe Befehle in den Logik-Baustein eingespeist werden, der dann einen Wechsel zwischen Standby-Modus und Aktiv-Modus vollzieht, entweder ohne oder auch nach Abarbeitung eines bereits gestarteten Programms im Aktiv-Modus, ggfs. unter Zwischenschaltung weiterer Programme wie z.B. "Reinigen" oder "Entkalken". Es wird weiterhin bevorzugt, dass am Rücksetz-Eingang, d.h. R-Eingang bzw. CLR-Eingang des Flip-Flops ein Signal der Signalgeber "Einschalten" über ein Zeitglied (z.B. Dauerdrücken von mehr als 10 Sekunden) und "Standby-Modus-Ein" über ein Zeitglied (z.B. für 30 Minuten keine Aktion des Benutzers) von der Steuerschaltung zur Steuerung interner Bauelemente der Zubereitungsmaschine anliegen, insbesondere über einen UND-Gatter-Baustein, was dem Ausschalten des Standby-Modus, Zurücksetzen des Flip-Flops und damit der Steuerschaltung, sowie ggfs. Einschalten des Aktiv-Modus entspricht.

Insbesondere sind das Flip-Flop und die beiden Gatter-Bausteine (UND und ODER) in einem gemeinsamen Logik-Baustein beinhaltet, können aber auch in separaten Logik-Unter-Bausteinen aufgenommen sein, die auch räumlich voneinander getrennt sein können, z.B. in unterschiedlichen Bereichen einer Platine oder auf unterschiedlichen Platinen. Insbesondere sind das Flip-Flop und die beiden Gatter-Bausteine (UND und ODER) zusammen in einem separaten Microcontroller oder dem Microcontroller für die Steuerung des KVA beinhaltet.

Vorteilhaft erfolgt das Einschalten des Standby-Modus mittels eines Standby-Bausteines, der z.B. in der Steuerschaltung zur Steuerung interner Bauelemente der Zubereitungsmaschine enthalten ist, zeitgesteuert nach z.B. 30 min, was durch den Benutzer in der Regel einstellbar ist.

Insgesamt wird mit dem erfindungsgemäßen KVA eine wesentliche Reduzierung des Stromverbrauchs im Standby-Modus um ca. 90% auf ca. 30 bis 40 mW erzielt, im Vergleich zum KVA der EP 2027799 B1.

Die Erfindung kombiniert also ein effizientes Schaltnetzteil mit einer geeigneten Logik. Ein Ändern des Betriebszustandes durch den Benutzer ist jederzeit möglich, um z.B. einen ggfs. auftretenden Gerätefehler zurück zu setzen. Im Standby-Modus kann der Microcontroller jederzeit durch eine externe Quelle wie z.B. Schalter oder Sensoren oder interner oder externer Datenbus geweckt werden. Hierdurch ist der Microcontroller in der Lage, auf Ereignisse zu reagieren, auch wenn der Microcontroller zuvor ohne Stromversorgung war. Die Funktion lässt sich sowohl in reiner Hardware, als auch durch einen minimal ausgestatteten zusätzlichen Microcontroller realisieren. Es ist zudem möglich, durch langes Betätigen der Einschalttaste, das gesamte System von Grund auf neu zu starten, um in Falle eines softwareseitigen Systemversagens einen normalen Betriebszustand wieder herzustellen.

Auch kann durch die Erfindung ein netztrennender Hauptschalter vollkommen entfallen, so dass hierdurch nicht unerhebliche Kosten eingespart werden können. Durch den optionalen Ersatz des Netzschalters (d.h. Hauptschalters) durch eine einfache STANDBY-EIN/AUS-Taste, die zudem im SELV-Bereich, d.h. Niederspannungsbereich des Gerätes verschaltet wird, ergeben sich wesentliche Vorteile bei Design und Positionierung der Taste am Gerät.

Mehrfachfunktionen des Tasters werden zudem ermöglicht, wie z.B. Einschalten, Starten, Abbrechen, Ausschalten, Zurücksetzen (des Flip-Flops), wobei sich die gewählte Funktion sowohl durch die Sequenz als auch durch die Betätigungszeit differenzieren lässt. Die Taste kann zudem deutlich kostengünstiger realisiert werden gegenüber einem Netzschalter (Hauptschalter), da die Stromtragfähigkeit nur einige Milliampere im Vergleich zu mehreren Ampere beträgt.

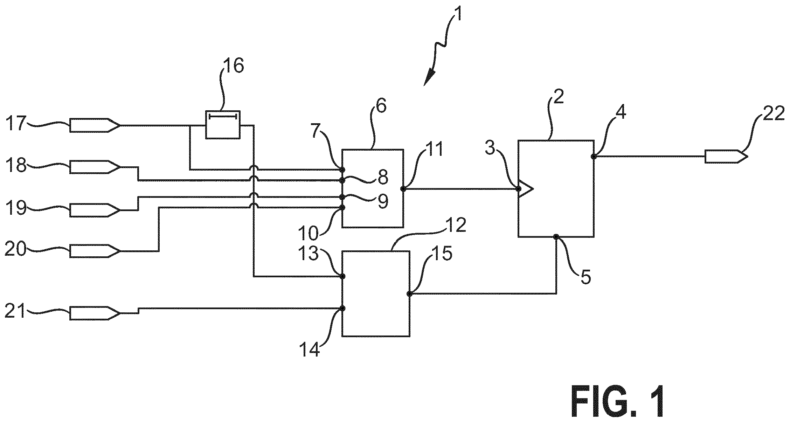

Das Prinzip der Erfindung wird im Folgenden anhand einer Zeichnung (Figur 1) beispielshalber noch näher erläutert.

In der Figur 1 ist nun der erfindungsgemäße Logik-Baustein 1 zu sehen, der ein Flip-Flop 2 beinhaltet, welches zwei Signaleingänge 3 (D) und 5 (CLR), sowie zwei Signalausgänge 4 (Q) und Q' (hier nicht belegt) aufweist.

Links neben dem Flip-Flop 2 sind ein ODER-Gatter 6 und ein UND-Gatter 12 dargestellt, welche ebenfalls Signaleingänge und Signalausgänge aufweisen. So hat das ODER-Gatter 6 vier Signaleingänge 7 bis 10 und einen Signalausgang 11. Das UND-Gatter 12 hat zwei Signaleingänge 13, 14 und einen Signalausgang 15.

Der elektrische Kontakt 17 "PowerBTN" der nicht näher dargestellten Ein-/Ausschalttaste des KVA ist mit dem Signaleingang 7 des UND-Gatters 12, ebenso wie über ein Zeitglied 16 mit dem Signaleingang 13 des ODER-Gatters 6, signalleitend verbunden.

Der elektrische Kontakt 18 "D-BUS WakeUp" ist mit dem Signaleingang 8 des UND-Gatters 12 signalleitend verbunden. Der elektrische Kontakt 19 "RTC WakeUp" ist mit dem Signaleingang 9 des UND-Gatters 12 signalleitend verbunden. Der elektrische Kontakt 20 "Interlock" ist mit dem Signaleingang 10 des UND-Gatters 12 signalleitend verbunden. Der elektrische Kontakt 21 "Soft OFF" ist mit dem Signaleingang 14 des ODER-Gatters 6 signalleitend verbunden.

Der Signalausgang 11 des ODER-Gatters 6 ist mit dem Signaleingang 3 (Daten-Eingang) des FlipFlops 2 signalleitend verbunden. Der Signalausgang 15 des UND-Gatters 12 ist mit dem Signaleingang 5 (Reset-Eingang) des FlipFlops 2 signalleitend verbunden. Der Signalausgang 4 des FlipFlops 2 ist mit dem elektrischen Kontakt 22 "PS On" des nicht näher dargestellten Microcontrollers der Steuerschaltung signalleitend verbunden.

Grundsätzlich gibt es außer dem stromlosen Modus des KVA bei vollkommen abgekoppelter Spannungsversorgung, zwei weitere Modi, nämlich den Standby-Modus, sowie den Aktiv-Modus, in welchen jeweils unterschiedliche Komponenten des KVA mit elektrischer Energie versorgt werden.
1. Stromlos-Modus: Der KVA ist völlig vom elektrischen Netz getrennt.
2. Standby-Modus: Der KVA wird z.B. mit dem Netzstecker an das Netz angekoppelt, so dass nur der Logik-Baustein 1 und ggfs. dessen Anzeige (z.B. LED) mit Kleinspannung von z.B. 5, 12 oder 24 VDC versorgt wird.
3. Aktiv-Modus: Der Benutzer hat im Standby-Modus die Einschalt-Taste gedrückt, so dass automatisch seriell hintereinander folgend ein Reset/Rücksetz-Vorgang und ein Initialisierungs-Vorgang durchgeführt werden, weitere (ggfs. alle übrigen) elektrischen Komponenten des KVA an die Kleinspannung bzw. an das 220 VAC-Netz angeschlossen werden und der KVA in einem Warte-Modus auf weitere Befehle des Benutzers oder einer internen oder externen elektrischen Komponente wartet. Aus dem Warte-Zustand des Aktiv-Modus kann nun durch Eingabe weiterer Befehle z.B. mittels Tasten, ein gewähltes Programm des KVA gestartet, unterbrochen oder beendet werden, der Aktiv-Modus durch Wechsel in den Standby-Modus beendet werden, sowie der Logik-Baustein 1 und/oder der Microprozessor der Steuerschaltung logisch rückgesetzt werden. Hierdurch können weitere elektrische Komponenten des KVA an die Kleinspannung bzw. an das 220 VAC-Netz angeschlossen oder wieder abgekoppelt werden.

Beenden des Aktiv-Modus: Durch eine separate Standby-Schaltung oder in der Steuerschaltung befindlichen Standby-Schaltung kann dann vom Warte-Zustand des Aktiv-Modus aus wieder in den Standby-Modus nach einer z.B. benutzerdefinierten Zeit automatisch gewechselt werden. Schließlich wäre es auch möglich, dass der Benutzer selbst einen Befehl z.B. über eine Taste eingibt, der den KVA in den Standby-Modus versetzt, was insbesondere aus dem Warte-Zustand des Aktiv-Modus erfolgt. Beide Möglichkeiten können aber auch aus bereits ausgewählten laufenden Programmen erfolgen, die dann entweder noch abgearbeitet werden oder unterbrochen werden. Hierdurch werden elektrische Komponenten des KVA von der Kleinspannung bzw. dem 220 VAC-Netz wieder abgekoppelt, so dass lediglich noch der Logik-Baustein 1 mit Kleinspannung versorgt wird.

Beenden des Standby-Modus: Wird nun die Spannungsversorgung des KVA z.B. durch Ziehen des Netzsteckers vollkommen getrennt, dann wird auch der Standby-Modus beendet. Soll der KVA wieder gestartet werden, dann wird wieder vom Stromlos-Modus in den Standby-Modus gewechselt, z.B. durch Einstecken des Netzsteckers.

Hierbei haben die einzelnen elektrischen Signalgeber und deren Kontakte der Figur 1 folgende Funktionen:
"PowerBTN" über den elektrischen Kontakt 17:
   Einschalt- und Ausschalt-Taster, welcher einen Wechsel vom Bestromten-Modus bzw. Standby-Modus in den Einschalt-Modus ermöglicht. Zudem kann z.B. durch längeres Drücken des Tasters ein Wechsel vom jeweiligen Modus in den Stromlos-Modus erfolgen und durch noch längeres Drücken ein Rücksetzen des FlipFlops bzw. des Microcontrollers der Steuerschaltung.
"D-BUS WakeUp" über den elektrischen Kontakt 18:
   WakeUp-Signal, welches von einem beliebigen anderen elektrischen Bauelement über den internen Bus oder einen externen Bus kommt und den Standby-Modus aufheben kann, z.B. durch Wechsel in den Einschalt-Modus.
"RTC WakeUp" über den elektrischen Kontakt 19:
   Eine im Microcontroller enthaltene Echtzeit-Uhr oder Stopp-Uhr, welche den Standby-Modus aufheben kann, z.B. durch Wechsel in den Einschalt-Modus. Hier kann z.B. vom Benutzer eingestellt werden, dass der KVA morgens um 7 Uhr vom Standby-Modus in den Betriebs-Modus wechselt, also der KVA eingeschaltet wird.
"Interlock" über den elektrischen Kontakt 20:
   Ein wichtiger Sicherheitskreis, der den Standby-Modus aufheben kann, z.B. durch Wechsel in den Einschalt-Modus, um Reinigungs-, Entkalkungs- oder Wartungsarbeiten (z.B. Diagnose) zu registrieren, die ansonsten im Standby-Modus nicht erkannt würden und dann erneut zur Erledigung am KVA angezeigt würden.

Es reicht grundsätzlich für die Funktionen "Einschalten" und "Ausschalten" des KVA aus, wenn einer der Signaleingänge 17 "PowerBTN", 18 "D-BUS WakeUp", 19 "RTC WakeUp", oder Interlock vorhanden ist, bevorzugt ist aber zumindest der 17 "PowerBTN" vorhanden.

"Soft OFF" über den elektrischen Kontakt 21:
Eine Softwarefunktion des Microprozessors selbst, welche einen Wechsel vom Einschalt-Modus bzw. Warte-Modus in den Standby-Modus ermöglicht, z.B. wenn 30 min keine Aktion durch den Benutzer erfolgt.

"PS On" über den elektrischen Kontakt 22:
Einschalt- oder Ausschaltsignal für Microprozessor der Steuerschaltung des KVA.

Wird nun in Figur 1 links bei am Netz befindlichen KVA (im Standby-Modus) über einen der vier Eingänge 7-10 eine logische 1 auf das ODER-Gatter 6 gegeben, dann steht eine logische 1 am Ausgang 11 des ODER-Gatters 6 an, welche auf den Eingang 3 des Flip-Flops 2 gegeben wird, so dass damit auch eine logische 1 am Ausgang 4 des Flip-Flops 2 ansteht, die auf den Ausgangskontakt 22 "PS On" für den Microcontroller der Steuerschaltung gegeben wird und somit diesen einschaltet. Dies entspricht einem Wechsel vom Standby-Modus in den Betriebs-Modus, so dass damit die Steuerschaltung weitere oder alle weiteren elektrischen Komponenten des KVA unter Betriebsspannung legt. Weitere nachfolgende Signale an den Eingängen 7-10 haben keine Auswirkung. Wird nun mittels Standby-Schaltung (nicht dargestellt) wieder vom Betriebs-Modus in den Standby-Modus zurück gewechselt, dann wird über den elektrischen Kontakt 21 "Soft OFF" eine logische 1 auf den Eingang 14 des UND-Gatters 12 gelegt, welches dann zusammen mit einer logischen 1 am Eingang 13 des UND-Gatters 12, die über den elektrischen Kontakt 17 "PowerBTN" und das Zeitglied 16 gesetzt wird (z.B. Dauerdrücken um mehr als 10 Sekunden der Ein-Taste), dann eine logische 1 am Eingang 5 des FlipFlops 2 gibt, so dass damit das FlipFlop 2 rückgesetzt wird und damit an dessen Ausgang 4 eine logische Null ansteht, die auf den elektrischen Kontakt 22 "PS On" gegeben wird und damit der Microcontroller der Steuerschaltung von der Betriebsspannung genommen wird, bzw. nur noch einen minimalen Strom für die Standby-LED benötigt.

Der gleiche Wechsel vom Aktiv-Modus in den Standby-Modus, was einem "Aus-Befehl" entspricht, kann aber auch durch den Nutzer selbst über den elektrischen Kontakt 17 "PowerBTN" erfolgen, z.B. durch längeres Dauerdrücken der Ein-Taste zwischen z.B. 3 und 10 Sekunden. Bei längerem Dauerdrücken erfolgt dann der zuvor beschriebene Reset/Rücksetz-Vorgang.

Das Signal der nicht dargestellten Ein/Aus/Reset-Taste des KVA wird also auf den elektrischen Kontakt 17 "PowerBTN" gegeben.

Die Signale der übrigen nicht dargestellten Programm-, Einstell- und Dosier-Tasten und - Knöpfe des KVA werden hauptsächlich auf Eingänge des Microcontrollers der Steuerschaltung gegeben, können aber auch über den elektrischen Kontakt 18 "D-BUS WakeUp" auf den Eingang des ODER-Gatters 6 des Logik-Bausteins 1 gegeben werden und damit Einfluss auf den Wechsel zwischen Standby-Modus und Aktiv-Modus nehmen.

Beim Wechsel vom Standby-Modus in den Aktiv-Modus wird dann zunächst das FlipFlop 2 und damit der Microprozessor der Steuerschaltung rückgesetzt, danach neu initialisiert und danach gewartet oder ein durch den Nutzer (oder interne oder externe automatische Befehle) ausgewähltes Programm abgearbeitet.

Die ausgewählten Programme können sein Starten, Unterbrechen, Ausschalten, Rücksetzen, Reinigen, Entkalken.

Die Erfindung kann in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Logik-Baustein
- 2: Flip-Flop
- 3: Eingang Flip-Flop
- 4: Ausgang Flip-Flop
- 5: Eingang Flip-Flop
- 6: UND-Gatter-Baustein
- 7: Eingang UND-Gatter-Baustein
- 8: Eingang UND-Gatter-Baustein
- 9: Eingang UND-Gatter-Baustein
- 10: Eingang UND-Gatter-Baustein
- 11: Ausgang UND-Gatter-Baustein
- 12: ODER-Gatter-Baustein
- 13: Eingang ODER-Gatter-Baustein
- 14: Eingang ODER-Gatter-Baustein
- 15: Ausgang ODER-Gatter-Baustein
- 16: Zeitbaustein
- 17: elektrischer Kontakt für "PowerBTN": Signalgeber als Taste für Einschalten/Ausschalten/Rücksetzen
- 18: elektrischer Kontakt für "D-BUS WakeUp": Signalgeber von beliebiger anderer interner und/oder externer elektrischer Komponente, für Aufhebung des Standby-Modus
- 19: elektrischer Kontakt für "RTC WakeUp": Signalgeber von innerer Uhr, für Aufhebung des Standby-Modus
- 20: elektrischer Kontakt für "Interlock": Signalgeber als Sensor oder Schalter für Manipulation durch Benutzer, für Aufhebung des Standby-Modus
- 21: elektrischer Kontakt für "Soft OFF": Signalgeber aus Microprozessor der Steuerschaltung für Wechsel in den Standby-Modus

## Patentansprüche

1. Zubereitungsmaschine für Heißgetränke oder flüssige Lebensmittel für Haushaltszwecke, insbesondere Kaffeevollautomat, beinhaltend einen Logik-Baustein (1), welcher mit internen und/oder externen Signalgebern signalleitend verbunden oder verbindbar ist, welche Eingangssignale in den Logik-Baustein (1) eingeben können, welcher mit einer Steuerschaltung zur Steuerung interner Bauelemente der Zubereitungsmaschine signalleitend verbunden ist, wobei der Logik-Baustein (1) aus den Eingangssignalen auf Grund einer inneren Logik ein Ausgangssignal erzeugt, mittels welchem die Steuerschaltung aktiviert oder deaktiviert werden kann, was einem Wechsel zwischen einem Standby-Modus mit mindestens unter Betriebsspannung stehendem Logik-Baustein (1) und einem Aktiv-Modus mit zusätzlich mindestens unter Betriebsspannung stehender Steuerschaltung entspricht, **dadurch gekennzeichnet, dass** der Logik-Baustein (1) ein Flip-Flop (2), insbesondere RS-Flip-Flop und/oder D-Flip-Flop, beinhaltet, welches mit einem über einen Ausgang (4) ausgegebene Ausgangssignal die Steuerschaltung aktiviert oder deaktiviert, und dass ein Daten-Eingang (3) des Flip-Flops (2) mit einem Ausgang (11) eines ODER-Gatter-Bausteins (6) signalleitend verbunden ist und Eingänge (7-10) des ODER-Gatter-Bausteins (6) mit mindestens einem der Signalgeber für das Einschalten und Ausschalten der Steuerschaltung über einen elektrischen Kontakt (17), sowie mit mindestens einem der Signalgeber für das Wechseln aus dem Standby-Modus in den Aktiv-Modus über einen elektrischen Kontakt (17, 18, 19, 20) signalleitend verbunden oder verbindbar ist.

2. Zubereitungsmaschine nach Anspruch 1, wobei die Signalgeber für den Wechsel vom Standby-Modus in den Aktiv-Modus über die elektrischen Kontakte (17, 18, 19, 20) Zubereitungsmaschinen-interne oder -externe Schalter/Taster/Sensoren und/oder Uhren/Zähler und/oder andere elektrische Komponenten, z.B. der Steuerschaltung, sind.

3. Zubereitungsmaschine nach Anspruch 1 oder 2, wobei die Signalgeber für die Eingangssignale des Logik-Bausteins (1) ihre Signale über Zubereitungsmaschinen-interne oder -externe Daten-Schnittstellen und/oder Daten-Busse an den Logik-Baustein (1) liefern.

4. Zubereitungsmaschine nach einem der Ansprüche 1 bis 3, wobei ein Rücksetz-Eingang (5) des Flip-Flops (2) mit einem Ausgang (15) eines UND-Gatter-Bausteins (12) signalleitend verbunden ist und Eingänge (13, 14) des UND-Gatter-Bausteins (12) mit mindestens Signalgebern für das Rücksetzen des Logik-Bausteins über elektrische Kontakte (17) und für eine Zeitüberschreitung ohne Aktion des Nutzers über elektrische Kontakte (21) signalleitend verbunden oder verbindbar sind, wobei das Eingangssignal des Signalgebers für die Zeitüberschreitung ohne Aktion des Nutzers über die elektrische Kontakte (21) aus der Steuerschaltung zur Steuerung interner Bauelemente der Zubereitungsmaschine erfolgt.

5. Zubereitungsmaschine nach Anspruch 4, wobei das Flip-Flop (2) und die beiden Gatter-Bausteine (6, 12) in einem gemeinsamen separaten Microcontroller oder einem Microcontroller der Steuerschaltung für die Steuerung der Zubereitungsmaschine aufgenommen sind.

6. Zubereitungsmaschine nach einem der Ansprüche 1 bis 5, wobei das Umschalten der Zubereitungsmaschine aus dem Aktiv-Modus in den Standby-Modus mittels eines Standby-Bausteines zeitgesteuert nach einer vom Nutzer vordefinierten Zeit erfolgt.

7. Zubereitungsmaschine nach einem der Ansprüche 1 bis 6, wobei die internen Bauelemente der Zubereitungsmaschine, welche durch die Steuerschaltung gesteuert und/oder geregelt werden, eine Anzahl Pumpen, Durchlauferhitzer, Brühgruppenmechaniken, Sensoren, Schalter/Taster, Anzeigen, etc. sind.

## Claims

1. Preparation machine for hot beverages or liquid food products for domestic purposes, in particular fully automated coffee machine, containing a logic chip (1), which is connected or is able to be connected in a signal-conducting manner to internal and/or external signal emitters, which are able to enter input signals into the logic chip (1), which is connected in a signal-conducting manner to a control circuit for controlling internal components of the preparation machine, wherein the logic chip (1) generates an output signal from the input signals on the basis of an internal logic, by means of which output signal the control circuit can be activated or deactivated, which corresponds to a switch between a standby mode with the logic chip (1) being at least under operating voltage and an active mode with the control circuit additionally at least being under operating voltage, **characterised in that** the logic chip (1) contains a flip-flop (2), in particular RS flip-flop and/or D flip-flop, which activates or deactivates the control circuit with an output signal emitted via an output (4), and that a data input (3) of the flip-flop (2) is connected in a signal-conducting manner to an output (11) of an OR gate chip (6) and inputs (7-10) of the OR gate chip (6) are connected or are able to be connected in a signal-conducting manner to at least one of the signal emitters for switching on and switching off the control circuit via an electrical contact (17), as well as to at least one of the signal emitters for switching from the standby mode into the active mode via an electrical contact (17, 18, 19, 20).

2. Preparation machine according to claim 1, wherein the signal emitters for switching from standby mode into active mode via the electrical contacts (17, 18, 19, 20) are preparation-machine-internal or external switches/buttons/sensors and/or clocks/timers and/or other electrical components, e.g. of the control circuit.

3. Preparation machine according to claim 1 or 2, wherein the signal emitters for the input signals of the logic chip (1) deliver their signals via preparation-machine-internal or external data interfaces and/or data buses on the logic chip (1).

4. Preparation machine according to one of claims 1 to 3, wherein a reset input (5) of the flip-flop (2) is connected in a signal-conducting manner to an output (15) of an AND gate chip (12) and inputs (13, 14) of the AND gate chip (12) are connected or are able to be connected in a signal-conducting manner to at least signal emitters for resetting the logic chip via electrical contacts (17) and for timing out without action by the user via electrical contacts (21), wherein the input signal of the signal emitter for timing out without action by the user takes place via the electrical contacts (21) from the control circuit for controlling internal components of the preparation machine.

5. Preparation machine according to claim 4, wherein the flip-flop (2) and the two gate chips (6, 12) are accommodated in a shared separate microcontroller or a microcontroller of the control circuit for controlling the preparation machine.

6. Preparation machine according to one of claims 1 to 5, wherein switching over the preparation machine from the active mode into the standby mode takes place by means of a standby chip in a time-controlled manner after a time predefined by the user.

7. Preparation machine according to one of claims 1 to 6, wherein the internal components of the preparation machine, which are controlled and/or regulated by the control circuit, are a number of pumps, continuous-flow heaters, brewing group mechanisms, sensors, switches/buttons, displays, etc.

## Revendications

1. Machine de préparation de boissons chaudes ou de denrées alimentaires liquides à des fins domestiques, en particulier machine à café intégralement automatique, contenant un composant logique (1), relié ou reliable en conduction de signaux avec des générateurs de signal internes et/ou externes, lesquels peuvent introduire des signaux d'entrée dans le composant logique (1), lequel est relié en conduction de signaux avec un circuit de commande pour la commande d'éléments de construction internes, dans laquelle le composant logique (1) génère au départ des signaux d'entrée et en raison d'une logique interne un signal de sortie au moyen duquel le circuit de commande peut être activé ou désactivé, ce qui correspond à un changement entre un mode veille avec au moins un composant logique (1) se trouvant sous tension de service et un mode actif avec en outre au moins un circuit de commande se trouvant sous tension de service, **caractérisé en ce que** le composant logique (1) contient un flip-flop (2), en particulier un flip-flop RS et/ou un flip-flop D, lequel active ou désactive le circuit de commande avec un signal de sortie émis via une sortie (4), et **en ce qu'**une entrée de données (3) du flip-flop (2) est reliée en conduction de signaux avec une sortie (11) d'un composant à porte OU (6) et les entrées (7-10) du composant à porte OU (6) sont reliées ou reliables en conduction de signaux via un contact électrique (17) avec au moins un des générateurs de signal pour la mise en circuit et la mise hors circuit du circuit de commande, ainsi que via un contact électrique (17, 18, 19, 20) avec au moins l'un des générateurs de signal pour le passage du mode veille au mode actif.

2. Machine de préparation selon la revendication 1, dans laquelle les générateurs de signal pour le passage du mode veille au mode actif via les contacts électriques (17, 18, 19, 20) sont des commutateurs/palpeurs/capteurs internes ou externes à la machine de préparation et/ou des horloges/compteurs et/ou d'autres composants électriques, p.ex. du circuit de commande.

3. Machine de préparation selon la revendication 1 ou 2, dans laquelle les générateurs de signal pour les signaux d'entrée du composant logique (1) fournissent leurs signaux via des interfaces de données et/ou des bus de données internes ou externes à la machine de préparation, au composant logique (1).

4. Machine de préparation selon l'une des revendications 1 à 3, dans laquelle une entrée de réinitialisation (5) du flip-flop (2) est reliée en conduction de signaux avec une sortie (15) d'un composant à porte ET (12) et les entrées (13, 14) du composant à porte ET (12) sont reliées en conduction de signaux avec au moins des générateurs de signal pour la réinitialisation du composant logique via des contacts électriques (17) et reliées ou reliables en conduction de signaux pour un dépassement temporel sans action de l'utilisateur via des contacts électriques (21), dans laquelle le signal d'entrée du générateur de signal s'opère pour le dépassement temporel sans action de l'utilisateur via les contacts électriques (21) au départ du circuit de commande pour la commande d'éléments de construction internes de la machine de préparation.

5. Machine de préparation selon la revendication 4, dans laquelle le flip-flop (2) et les deux composants à porte ET (6, 12) sont intégrés dans un microcontrôleur distinct commun ou un microcontrôleur du circuit de commande pour la commande de la machine de préparation.

6. Machine de préparation selon l'une des revendications 1 à 5, dans laquelle le passage de la machine de préparation du mode actif vers le mode veille s'effectue au moyen d'un élément de construction de veille à commande temporelle après une durée préalablement définie par l'utilisateur.

7. Machine de préparation selon l'une des revendications 1 à 6, dans laquelle les éléments de construction internes de la machine de préparation commandés et/ou régulés par le circuit de commande sont un nombre de pompes, de chauffe-eau, d'éléments mécaniques d'échaudage, de capteurs, de commutateurs/palpeurs, de voyants, etc.
